Europäisches Patentamt

European Patent Office

Office européen des brevets

(11) Publication number: **0 390 431**
**A2**

## (12) EUROPEAN PATENT APPLICATION

(21) Application number: **90303120.1**

(22) Date of filing: **23.03.90**

(51) Int. Cl.⁵: **B62D 25/20**

(30) Priority: **31.03.89 GB 8907326**
**24.05.89 GB 8911953**

(43) Date of publication of application:
**03.10.90 Bulletin 90/40**

(84) Designated Contracting States:
**DE ES FR GB NL**

(71) Applicant: **Brotherwood, Rodney John**
**1 The Orchard, Mill Street, Broadway**
**Weymouth, Dorset(GB)**

(72) Inventor: **Brotherwood, Rodney John**
**1 The Orchard, Mill Street, Broadway**
**Weymouth, Dorset(GB)**

(74) Representative: **Spall, Christopher John et al**
**BARKER, BRETTELL & DUNCAN 138 Hagley**
**Road**
**Edgbaston Birmingham B16 9PW(GB)**

(54) Improvements in passenger carrying vehicles.

(57) A passenger carrying vehicle is adapted to accommodate an invalid wheel chair and its occupant (20) by replacing a region of the floor between spaced longitudinal chassis members (1, 2) by a floor panel (10) of generally channel outline which has a local floor region (13) spaced below the chassis member (1, 2) to provide a support for the wheel chair. A transverse beam (5) positioned below the floor region (13) interconnects the chassis members (1, 2) and defines a mounting for parts (4) of the suspension assemblies.

FIG.1.

## IMPROVEMENTS IN PASSENGER CARRYING VEHICLES

This invention relates to passenger carrying vehicles of the kind adapted to accommodate an invalid wheel chair and its occupant.

It is known to adapt passenger carrying vehicles for, example vans, estate cars, station wagons and the like having rear doors, to accommodate a wheel chair and its occupant by providing a ramp at the rear of the vehicle to facilitate movement of a wheel chair into and out of the vehicle when the rear door is open.

It is common practice locally to raise a section of the roof of a vehicle locally in the form of a bubble to accommodate the height of the occupant of a wheel chair. Such a construction, however, tends to be unsightly with the occupant of the wheel chair appearing unnecessarily conspicuous.

In another modification it is known to lower the floor of the vehicle in the region of the rearmost seats, when fitted. This has the advantage that the occupant of a wheel chair can be accommodated substantially at the same height as normally seated rear passengers. It may also be necessary to raise the roof to accommodate chair occupants of above average height and to facilitate transfer of the wheel chair into and out of the vehicle. Such a roof modification may be relatively slight and discrete, and conforms suitably to the normal roof contour.

According to one aspect of any invention a passenger carrying vehicle for accommodating an invalid wheel chair and its occupant and having a rear door incorporates a pair of spaced longitudinal chassis members, a local floor region positioned below the chassis members and extending rearwardly substantially from the backs of the seats in front of the rear most seats to define a support for the wheel chair and its occupant, and a transverse beam positioned below the local floor region and interconnecting the chassis members, the beam defining a mounting for parts of the rear suspension assemblies of the vehicle.

The local floor region is so positioned that when accommodated in the vehicle the occupant of the wheel chair is sitting substantially of the same height as a passenger normally seated in a rearmost seat.

Conveniently the local floor region comprises the base of a floor panel of generally channel shaped outline of which the side walls of the panel are secured at their upper ends to the chassis members, and the beam is of generally U-shaped outline having a transverse centre section which traverses the panel and a pair of upwardly directed limbs which straddle the side walls of the panel and are secured at their upper ends to the chassis members.

Preferably the floor panel extends forwardly from the back of the seat in front of the rearmost seat to define a transverse recess which opens downwardly to accommodate the fuel tank of the vehicle.

When the vehicle normally has a pair of front seats, and a single row of rear seats, the floor panel extends forwardly from the backs of the front seats.

According to another aspect of any invention, a passenger motor vehicle of the kind having a rear door is adapted to receive an invalid wheel chair and its occupant by the steps of:

(a) removing the rear seat, the fuel tank, the mountings between a pair of spaced longitudinally extending chassis members and the rear suspension assemblies, and a section of the floor between the chassis members from a point substantially coincident with the back of the seat in front of the rear most seat to the rear of the vehicle;

(b) replacing the floor with a panel of generally channel-shaped outline which comprises a well between the chassis members and of which the base which lies below the remainder of the floor of the vehicle defines a support for the wheel chair and its occupant;

(c) taking a beam of generally U-shaped section and securing the free upper ends of the limbs of the beam to the chassis members to act as a brace therebetween and with a centre section interconnecting the limbs traversing the base of the panel;

(d) adapting the limbs of the beam to form mountings for the rear suspension assemblies; and

(e) repositioning the fuel tank on the vehicle at a location disposed forwardly of the well

The vehicle may also be further adapted by replacing the roof of the vehicle with a roof panel which slopes upwardly from the front of the vehicle towards the rear in order to increase the head room in the region of the rear passenger section.

In a further modification in which the vehicle is of the kind having a wrap-round bumper, at least a centre section of the bumper is removed for at least the width of the panel, and the rear door is provided with an extension which depends downwardly and conforms to the configuration of the remainder of the bumper.

When the door is closed the continuous line of a bumper is maintained but, when the door is open, access to the vehicle is unimpeded by the presence of a conventional bumper.

Preferably the conventional bumper is replaced by a three-part plastics moulding, of which the centre moulding is secured to the downwardly depending extension, and the two other mouldings are secured to the body of the vehicle on opposite sides of the aperture for the rear door.

Plastics mouldings may also be fitted to the vehicle on at least one side of the panel in order to accommodate the re-located spare wheel, speakers, and tools.

One embodiment of my invention is illustrated in the accompanying drawings in which:-

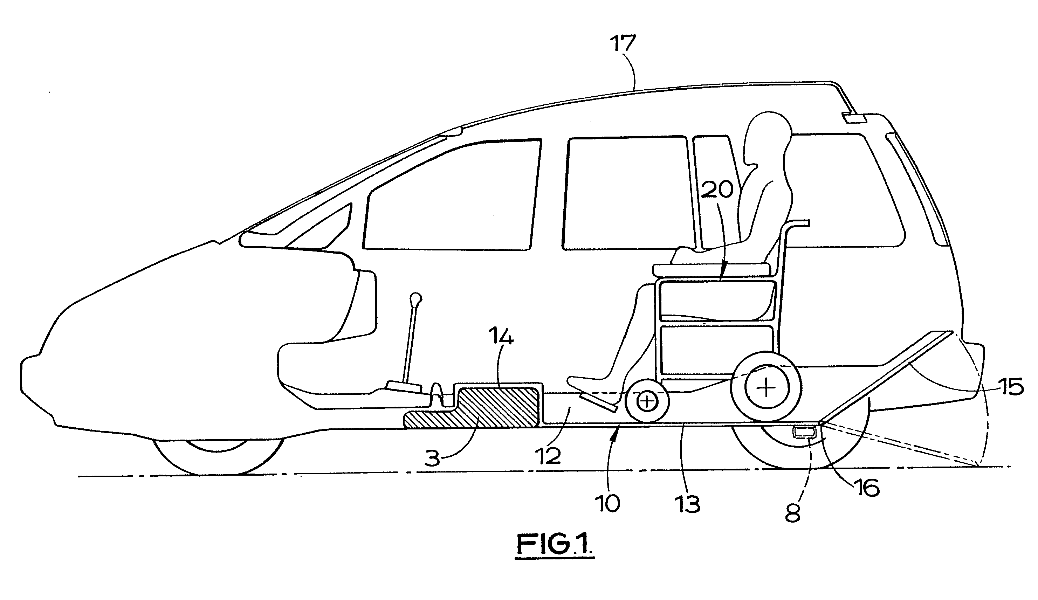

Figure 1 is a cut-away side elevation of a passenger carrying vehicle adapted to accommodate an invalid wheelchair and its occupant;

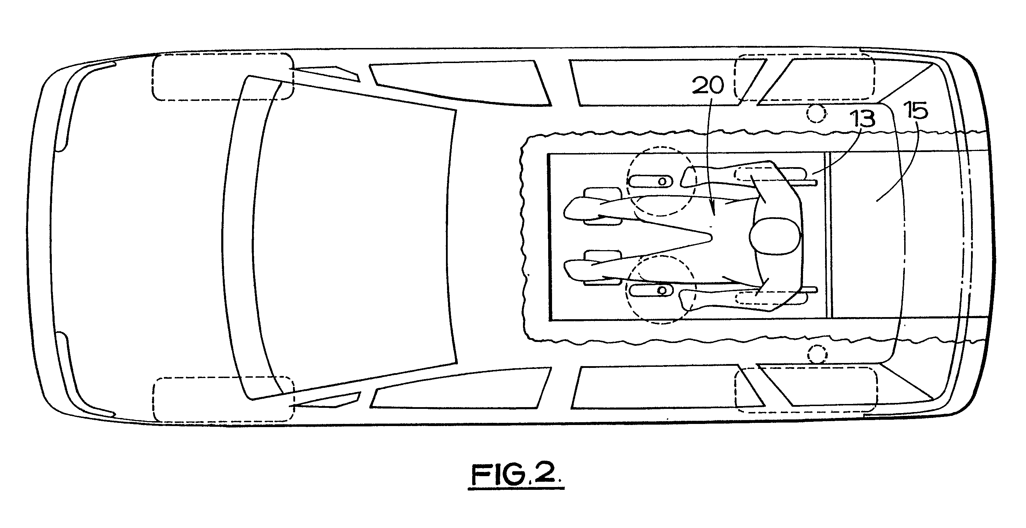

Figure 2 is a plan view of the same;

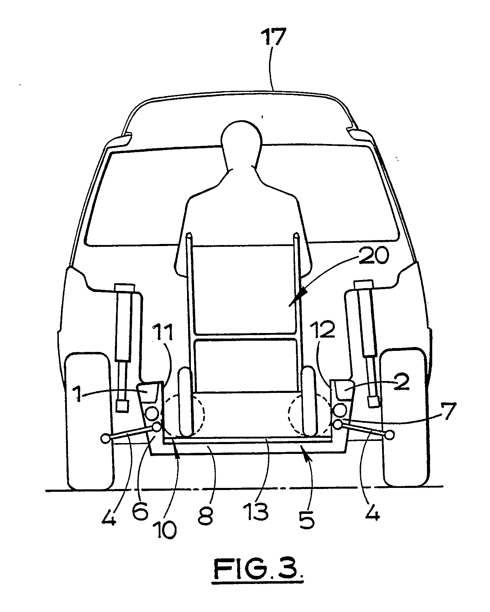

Figure 3 is a rear view; and

Figure 4 is a view similar to Figure 1 but showing a modification.

The vehicle illustrated in the drawings has been adapted from a standard vehicle of the passenger carrying type such as a van, estate car, or station wagon having a transverse rear seat to the rear of the driver's and passenger's front seats, and a rear door, conveniently a door hinged at its upper edge for movement about a generally horizontal axis.

The vehicle is adapted by removing the rear seat, and removing a section of the floor between parallel spaced chassis members 1, 2 for a length extending from the rear of the vehicle, to a position substantially 1 foot in front of the rear of the front seats. The fuel tank 3 and the mountings for the rear suspension links and rods 4 are also removed. This presents a construction in which an open space is exposed between the chassis members 1, 2 for a substantial length of the vehicle.

At or adjacent to their rear ends the chassis members 1, 2 are braced by a transverse metal beam 5 generally of U-shaped outline and having a pair of spaced substantially parallel limbs 6, 7 which are integral at their lower ends with a centre section 8. The upper free ends of the limbs 6, 7 are welded to the lower faces of the chassis members 1, 2 so that the frame 5 lies in a plane substantially normal to a plane containing the chassis members 1, 2 with the centre section 8 spaced below the chassis members 1, 2.

The limbs 6, 7 are adapted to define mountings for the rear suspension links and rods 4.

A floor panel 10 is fitted into the space between the chassis members 1, 2. As illustrated the panel 10 is of channel section having spaced side walls 11, 12 which, at their free upper ends, are welded to the chassis members 1, 2, and an integral base 13. The base 13 is provided at its forward end with a transverse recess 14 in which the fuel tank 3 is housed and the depth of the recess 14 is such that the base of the tank 3 is substantially co-planar with the base 13.

A flap 15 is hingedly connected to the rear of the panel 10 for movement about a transverse axis 16 between an upwardly directed closed position in which it closes the rear end portion of the floor of the vehicle and a downwardly directed lower position to define a ramp.

The roof of the vehicle is replaced by a roof panel 17, suitably a moulding of plastics material, which slopes upwardly from the front of the vehicle towards the rear. This increases the head room towards the rear of the passenger compartment.

The base 13 of the floor panel 10 forms a well which defines a support for a wheel chair and its occupant 20 and the chair can be wheeled up the ramp and into the vehicle when the rear door is open.

The position of the base 13, specifically the depth of the well, is chosen so that the occupant of a wheel chair will be seated substantially at the same height in the vehicle as other rear passengers who can be seated on opposite sides of the wheel chair, suitably on special seats of a reduced width.

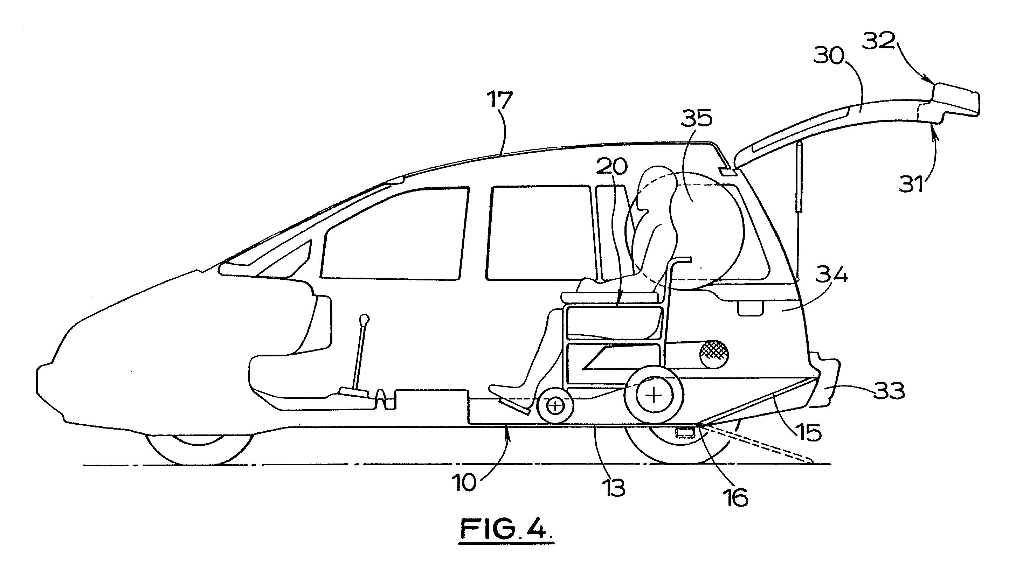

In the modified construction illustrated in Figure 4 of the drawings, the conventional wrap-round bumper, which normally surrounds the rear of the vehicle and portions of the rear wings, is removed. The rear door of the vehicle for closing a rear aperture comprises a tail gate 30 which is hingedly connected to the vehicle at its upper end by means of a horizontal hinge mechanism. The tail gate is extended at its lower edge for its full width by means of a fabricated metal extension 31. When the tail gate is closed, the extension 31 co-operates with rear end of the flap 15, and with regions of the floor panel 10 at the upper ends of the side walls 11, 12.

A centre moulding 32 of plastics material is secured to the outer face of the extension 31, and corner mouldings 33 of similar cross section are secured to the rear of the vehicle on opposite sides of the aperture with portions extending over the margins of the rear wings. When the tail gate 30 is in its closed position, the three mouldings 32 and 33 line in a common plane with adjacent ends of the mouldings 32, 33 in close proximity to each other to give the impression of a continuous bumper similar in appearance to the conventional wrap-round bumper.

The vehicle is also provided on one side with a modified side panel in the form of plastics moulding 34. This side panel 34 is adapted to provided storage accommodation for the spare wheel 35, and speakers and tools. As illustrated the spare wheel 35 is accommodated substantially at head height.

**Claims**

1. A passenger carrying vehicle for accommodating an invalid wheel chair and its occupant and having a rear door incorporates a pair of spaced longitudinal chassis members (1, 2), characterised in that a local floor region (13) positioned below the chassis members (1, 2) extends rearwardly substantially from the backs of the seats in front of the rear most seats to define a support for the wheel chair and its occupant, and a transverse beam (5) positioned below the local floor region (13) interconnects the chassis members, the beam (5) defining a mounting for parts of the rear suspension assemblies (4) of the vehicle.

2. A vehicle according to claim 1, characterised in that the local floor region (13) is so positioned that when accommodated in the vehicle the occupant of the wheel chair is sitting substantially of the same height as a passenger normally seated in a rearmost seat.

3. A vehicle according to claim 1 or claim 2, characterised in that the local floor region (13) comprises the base (13) of a floor panel (10) of generally channel shaped outline of which the side walls (11, 12) of the panel are secured at their upper ends to the chassis members (1, 2), and the beam (5) is of generally U-shaped outline having a transverse centre section (8) which traverses the panel and a pair of upwardly directed limbs (6, 7) which straddle the side walls (11, 12) of the panel and are secured at their upper ends to the chassis members.

4. A vehicle according to claim 3, characterised in that the floor panel (10) extends forwardly from the back of the seat in front of the rearmost seat to define a transverse recess (14) which opens downwardly to accommodate the fuel tank (3) of the vehicle.

5. A vehicle according to claim 3 or claim 4, in which the vehicle has a pair of front seats, and a single row of rear seats, characterised in that the floor panel (10) extends forwardly from the backs of the front seats.

6. A vehicle according to any preceding claim, characterised in that the roof of the vehicle is replaced with a roof panel (17) which slopes upwardly from the front of the vehicle towards the rear in order to increase the head room in the region of the rear passenger section.

7. A vehicle according to any of claim 3-6, in which the vehicle is of the kind having a wrapround bumper, characterised in that at least a centre section of the bumper is removed for at least the width of the floor panel (10), and the rear door (30) is provided with an extension (31) which depends downwardly and conforms to the configuration of the remainder of the bumper.

8. A vehicle according to claim 7, characterised in that the conventional bumper is replaced by a three-part plastics moulding, of which the centre moulding (32) is secured to the downwardly depending extension (31), and the two other mouldings (33) are secured to the body of the vehicle on opposite sides of the aperture for the rear door (30).

9. A passenger motor vehicle of the kind having a rear door is adapted to receive an invalid wheel chair and its occupant by the steps of:

(a) removing the rear seat, the fuel tank, the mountings between a pair of spaced longitudinally extending chassis members (1, 2) and the rear suspension assemblies (4), and a section of the floor between the chassis members from a point substantially coincident with the back of the seat in front of the rear most seat to the rear of the vehicle;

(b) replacing the floor with a panel (10) of generally channel-shaped outline which comprises a well between the chassis members (1, 2) and of which the base (13) which lies below the remainder of the floor of the vehicle defines a support for the wheel chair and its occupant (20);

(c) taking a beam (5) of generally U-shaped section and securing the free upper ends of the limbs (6, 7) of the beam to the chassis members (1, 2) to act as a brace therebetween and with a centre section (8) interconnecting the limbs traversing the base of the panel;

(d) adapting the limbs (6, 7) of the beam (5) to form mountings for the rear suspension assemblies (4); and

(e) repositioning the fuel tank (3) on the vehicle at a location disposed forwardly of the well.

FIG1.

15

13

20

FIG.2.

FIG.3.

FIG.4.

EP 0 390 431 A2